# EUROPEAN PATENT APPLICATION

(11) **EP 1 083 406 A2**
(43) Date of publication of application: **14.03.2001**
(21) Application number: 00203089.8
(22) Date of filing: 07.09.2000
(51) Int. Cl.: G01D 5/14, G01D 5/16

(54) **Rotary position sensor**

(30) Priority: 09.09.1999 US 153137 P
(71) Applicant: Delphi Technologies, Inc., Troy, MI 48007 (US)
(72) Inventor: Nehl, Thomas W., Shelby Township, MI 48316 (US); Boules, Nady, Troy, MI 48098 (US); Schroeder, Thaddeus, Rochester Hills, MI 48309 (US); Henry, Rassem R., Clinton Township, MI 48038 (US)
(74) Representative: Denton, Michael John

(57) **Abstract**

A rotary position sensor (20, 20 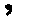 ) featuring a magnetized rotor (10, 10 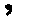 ) which produces a magnetic flux density that varies sinusoidally with respect to the angular position of the rotor, which may be either a selectively magnetized ring (10 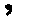 ) or disk (10). The magnetic flux density produced by the rotor is measured by a sensor (30, 30a) that responds in a linear fashion to the magnitude of the radial component of the magnetic flux density. Typical embodiments would use magnetic flux density sensors, as for example either linear Hall sensors or magnetoresistive type sensors. The measured magnetic flux densities are then used as in a traditional resolver to compute position or used to directly generate control signals to operate, for example, a motor.

## Description

### CROSS-REFERENCE TO RELATED APPLICATIONS

The present application is a continuation-in-part application of provisional application serial number 60/153,137, filed on September 9, 1999, which application is currently pending.

### TECHNICAL FIELD

The present invention relates to rotary magnetic position sensors used to measure angular displacements.

### BACKGROUND OF THE INVENTION

The use of magnetoresistors (MRs) and Hall devices, as position sensors is well known in the art. For example, a magnetically biased differential MR sensor may be used to sense angular position of a rotating toothed wheel, as for example exemplified by U.S. Patent 5,754,042.

Position sensors with digital outputs provide discrete position information only, whereas an analog position sensor can provide both position information and outputs that can be used to drive an electric motor or other similar electromechanical devices. Many of these devices are driven by sinusoidal excitations as a function of position. Consequently, an analog position sensor having an output that varies sinusoidally with position could be used to generate absolute angular positions as, for example, for an electrical power steering system to measure the angle of rotation of the steering wheel, and/or reference signals to produce the desired sinusoidal phase drive currents and voltages to drive electric motors and other similar electromechanical devices.

Accordingly, what remains needed is a compact inexpensive contactless position sensor having a sinusoidally varying output suitable for specialized sensing schemes.

### SUMMARY OF THE INVENTION

The present invention is a rotary position sensor featuring a magnetized rotor which produces a magnetic flux density that varies sinusoidally with respect to the angular position of the rotor. The magnetic flux density produced by the rotor is measured by a sensor that responds in a linear fashion to the magnitude of the radial component of the magnetic flux density. Typical embodiments would use magnetic flux density sensors, as for example either linear Hall sensors or magnetoresistive type sensors. The measured magnetic flux densities are then used as in a traditional resolver to compute position or used to directly generate control signals to operate, for example, a motor.

Magnetized permanent magnet disks or rings can be used as the rotor to generate signals that vary sinusoidally with respect to position for position determination or for phase current or voltage control for electrical machines, such as motors. Normal position information can be obtained by using two linear magnetic flux density sensors in electrical quadrature. Control of three phase currents or voltages requires a minimum of two sensors spaced 120 electrical degrees apart. The third phase signal being derived from the other two. The use of three sensors spaced 120 electrical degrees apart, in this case, provides a measure of redundancy. Multiple equally spaced sensors could also be used as multiple phase commutation sensors for electric drives requiring multiple phases. Additional sensors may also be included for diagnostic or compensation purposes depending on the application.

According to a first aspect of the present invention, a rotor made of a homogeneous cylindrical permanent magnetic disk or ring is uniformly magnetized in a parallel fashion (i.e. perpendicular to the axis of the cylindrical disk or ring), and produces a sinusoidal radial magnetic flux density in an external constant length nonmagnetic material, such as an air gap. Properly positioned stationary magnetic flux density sensors detect a sinusoidally varying magnetic flux density as the rotor rotates and output a sinusoidally varying signal in response to the sinusoidally varying magnetic flux density.

Accordingly to a second aspect of the present invention, a rotor including a continuous cylindrical permanent magnetic ring, or a ring made of discrete magnetic arcuates, is sinusoidally magnetized in a radial fashion (i.e. in a radial direction of a circle perpendicular to the axis of the cylindrical ring or arcuates), and produces a sinusoidal radial magnetic flux density in an external constant length nonmagnetic material, such as an air gap. Properly positioned stationary magnetic flux density sensors detect a sinusoidally varying magnetic flux density as the rotor rotates and output a sinusoidally varying signal in response to the sinusoidally varying magnetic flux density.

According to a third aspect of the present invention, a rotor made of a cylindrical permanent magnetic disk, a continuous magnetic ring or a ring made of discrete magnetic arcuates is sinusoidally magnetized in a tangential fashion (i.e. tangential to a circle perpendicular to the axis of the cylindrical disk or ring), and produces a sinusoidal radial magnetic flux density in an external constant length nonmagnetic material, such as an air gap. Properly positioned stationary magnetic flux density sensors detect a sinusoidally varying magnetic flux density as the rotor rotates and output a sinusoidally varying signal in response to the sinusoidally varying magnetic flux density.

Accordingly, it is an object of the present invention to provide a rotary position sensor according to the first, second, and third aspects of the present invention which is capable of producing and detecting a sinusoidally varying magnetic flux density used to determine angular position of the rotor and/or to provide sinusoidal signals to drive multiple phase electric machines, wherein the rotary position sensor according to the second and third aspects of the present invention are capable of providing sinusoidal signals to drive multiple phase electric machines which require more than two magnetic poles for their operation.

This and additional objects, features and advantages of the present invention will become clearer from the following specification of a preferred embodiment.

### BRIEF DESCRIPTION OF THE DRAWINGS

Figure 1A is a schematic representation of magnetic disk according to a first aspect of the present invention.
Figure 1B is a schematic representation of magnetic ring according to the first aspect of the present invention.
Figure 2A is a first example of a rotary position sensor according to the first aspect of the present invention.
Figure 2B is a second example of a rotary position sensor according to the first aspect of the present invention.
Figure 3 is an example of a rotary position sensor according to a second aspect of the present invention.
Figure 4A is a first example of a rotary position sensor according to a third aspect of the present invention.
Figure 4B is a second example of a rotary position sensor according to the third aspect of the present invention.
Figure 5A is an example of a multipole rotary position sensor according to the second aspect of the present invention.
Figure 5B is an example of a multipole rotary position sensor according to the third aspect of the present invention.

### DESCRIPTION OF THE PREFERRED EMBODIMENT

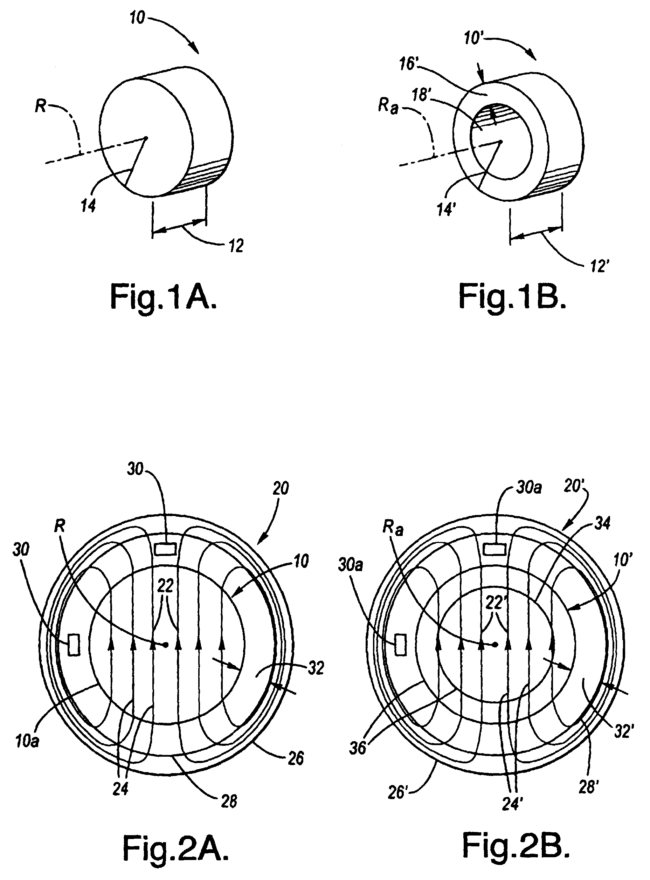

Figure 1A is a schematic representation of magnetic disk 10 used in accordance with a first aspect of the present invention. The length 12 and radius 14 are, typically, approximately 10 mm. However, the exact dimensions of the length 12 and radius 14 depend upon the particular application. The disk is rotatable about a rotation axis R.

Figure 1B is a schematic representation of magnetic ring 10 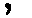 used in accordance with a first aspect of the present invention. The length 12 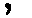 and radius 14 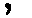 are, typically, approximately 10 mm. The thickness of the ring 16 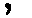 is, typically, 3 to 10 mm depending upon the number of magnetic poles and the particular application. The exact dimensions of the length 12 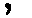 and radius 14 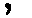 depend upon the particular application, as well. The ring 10 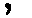 is rotatable about a rotation axis Rₐ.

Figure 2A is a first example of a rotary position sensor 20 according to the first aspect of the present invention. The rotary position sensor 20 consists of a magnetic disk 10 rotatable about the rotation axis R, the disk forming a rotor 10a that is homogeneously magnetized in a parallel fashion 22 as shown by the magnetic flux density 24 in Figure 2A, a stationary core 26 made of a ferromagnetic (also referred to as "soft" magnetic) material, and a stationary annulus 28 made of a nonmagnetic material with two or more magnetic flux density sensors 30 (ie., Hall sensors or magnetoresistors) which are appropriately positioned, not necessarily in quadrature, within the annulus to detect the magnetic flux density 24 to meet specific sensing requirements. As is well known in the art, the homogeneous cylindrical permanent magnet 10 will produce a sinusoidal radial flux density 24 in a constant length nonmagnetic gap 32 when uniformly magnetized in a parallel fashion 22 as shown in Figure 2A. As the rotor 10a rotates, the magnetic flux density sensors 30 detect a sinusoidal magnetic flux density 24 and output a corresponding sinusoidal signal. The signal outputs of the magnetic flux density sensors 30 may be used to detect the absolute angular position of the rotor 10a or to provide sinusoidal signals to drive multiple phase electric machines.

Figure 2B is a second example of a rotary position sensor 20' according to the first aspect of the present invention. The rotary position sensor 20' consists of a magnetic ring 10' which is rotatable about the rotation axis Rₐ, the ring being homogeneously magnetized in a parallel fashion 22' as shown by the magnetic flux density 24' in Figure 2B. The rotary position sensor 20' further consists of a stationary outer core 26' made of a magnetic material, a stationary annulus 28 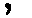 made of a nonmagnetic material with two or more magnetic flux density sensors 30a (ie., Hall sensors or magnetoresistors) which are appropriately positioned, not necessarily in quadrature, within the annulus to detect the magnetic flux density 24 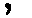 to meet specific sensing requirements, and a inner core 34 made of a ferromagnetic material rotating in conjunction with the magnetic ring 10 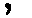 , wherein the magnetic ring and the inner core collectively form a rotor 36. As is well known in the art, the homogeneous cylindrical permanent magnet 10' will produce a sinusoidal radial flux density 24' in a constant length nonmagnetic gap 32' when uniformly magnetized in a parallel fashion 22' as shown in Figure 2B. As the rotor 36 rotates, the magnetic flux density sensors 30a detect a sinusoidal magnetic flux density 28' and output a corresponding sinusoidal signal. The signal outputs of the magnetic flux density sensors 30a may be used to detect the absolute angular position of the rotor 36 or to provide sinusoidal signals to drive multiple phase electric machines.

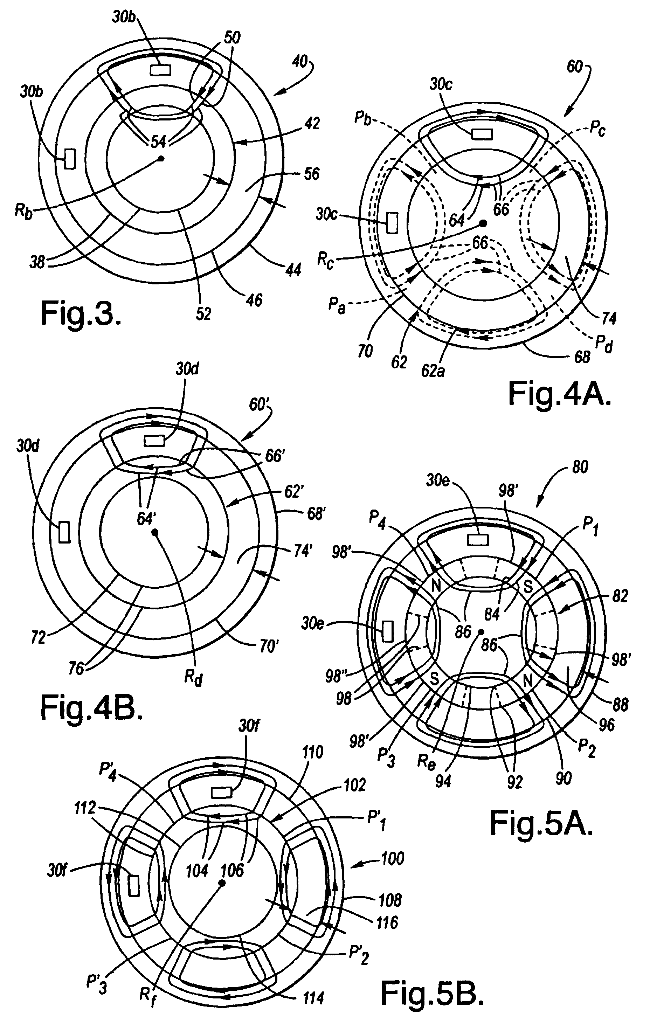

Figure 3 is an example of a rotary position sensor 40 according to a second aspect of the present invention. The rotary position sensor 40 consists of a magnetic ring 42 rotatable about a rotation axis R_{b}, wherein the ring is sinusoidally magnetized in a radial fashion 54 as shown by the magnetic flux density 50 in Figure 3. The rotary position sensor 40 further consists of a stationary outer core 44 made of a magnetic material, a stationary annulus 46 made of a nonmagnetic material with two or more magnetic flux density sensors 30b (ie., Hall sensors or magnetoresistors) which are appropriately positioned, not necessarily in quadrature, within the annulus to detect the magnetic flux density 50 to meet specific sensing requirements, and an inner core 52 made of a magnetic material rotating in conjunction with the magnetic ring 42, wherein the magnetic ring and the inner core collectively form a rotor 38. The sinusoidal magnetized cylindrical permanent magnet 42 will produce a sinusoidal radial flux density 50 in a constant length nonmagnetic gap 56 when sinusoidally magnetized in a radial fashion 54 as shown in Figure 3. As the rotor 38 rotates, the magnetic flux density sensors 30b detect a sinusoidal magnetic flux density 50 and output a corresponding sinusoidal signal. The signal outputs of the magnetic flux density sensors 30bmay be used to detect the absolute angular position of the rotor 38 or to provide sinusoidal signals to drive multiple phase electric machines.

Figure 4A is a first example of a rotary position sensor 60 according to a third aspect of the present invention. The rotary position sensor 60 consists of a rotor 62a rotatable about a rotation axis R_{c}, consisting of a cylindrically-shaped magnetic disk 62 which is sinusoidally magnetized in a tangential fashion 64 as shown by the magnetic flux density 66 in Figure 4A. The rotary position sensor 60 further consists of an outer core 68 made of a ferromagnetic material, and a stationary annulus 70 made of a nonmagnetic material with two or more magnetic flux density sensors 30c (ie., Hall sensors or magnetoresistors) which are appropriately positioned, not necessarily in quadrature, within the annulus to detect the magnetic flux density 66 to meet specific sensing requirements. The sinusoidally magnetized disk permanent magnet 62 will produce a sinusoidally radial flux density 66 in a constant length nonmagnetic gap 74 when sinusoidally magnetized in a tangential fashion 64 as shown in Figure 4A. As the rotor 62a rotates, the magnetic flux density sensors 30c detect a sinusoidal magnetic flux density 66 and output a corresponding sinusoidal signal. The signal outputs of the magnetic flux density sensors 30c may be used to detect the absolute angular position of the rotor 62a or to provide sinusoidal signals to drive multiple phase electric machines. The cylindrically-shaped magnetized disk 62 may be a multipole magnetized, as shown by the dashed magnetic flux density 66 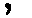 to provide magnetic poles Pₐ, P_{b}, P_{c}, P_{d}.

Figure 4B is a second example of a rotary position sensor 60' according to the third aspect of the present invention. The rotary position sensor 60' consists of a magnetic ring 62' rotatable about a rotation axis R_{d}, which is sinusoidally magnetized in a tangential fashion 64' as shown by the magnetic flux density 66' in Figure 4B. The rotary position sensor further consists of a stationary outer core 68' made of a ferromagnetic material, a stationary annulus 70' made of a nonmagnetic material with two or more magnetic flux density sensors 30d (ie., Hall sensors or magnetoresistors) which are appropriately positioned, not necessarily in quadrature, within the annulus to detect the magnetic flux density 66 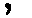 to meet specific sensing requirements, and an inner core 72, made of either a ferromagnetic material or nonmagnetic material depending upon the application, rotating in conjunction with the magnetic ring 62 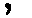 , wherein the magnetic ring and the inner core collectively form a rotor 76. The sinusoidally magnetized permanent magnet ring 62 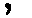 will produce a sinusoidal radial flux density 66 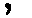 in a constant length nonmagnetic gap 74 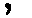 when sinusoidally magnetized in a tangential fashion 64 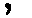 as shown in Figure 4B. As the rotor 76 rotates, the magnetic flux density sensors 30d 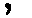 detect a sinusoidal magnetic flux density 66 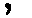 and output a corresponding sinusoidal signal. The signal outputs of the magnetic flux density sensors 30d may be used to detect the absolute angular position of the rotor 76 or to provide sinusoidal signals to drive multiple phase electric machines.

Figure 5A is an example of a multipole rotary position sensor 80 according to the second aspect of the present invention. The multipole rotary position sensor 80 consists of a magnetic ring 82 rotatable about a rotation axis Rₑ, wherein the ring is sinusoidally magnetized in a radial fashion 84 as shown by the magnetic flux density 86 such as to produce a magnetic ring having multiple magnetic poles P₁, P₂, P₃, P₄, as shown in Figure 5A. The multipole rotary position sensor 80 further consists of a stationary outer core 88 made of a ferromagnetic material, a stationary annulus 90 made of a nonmagnetic material with two or more magnetic flux density sensors 30e (ie., Hall sensors or magnetoresistors) which are appropriately positioned, not necessarily in quadrature, within the annulus to detect the magnetic flux density 86 to meet specific sensing requirements, and an inner core 94 made of a ferromagnetic material rotating in conjunction with the magnetic ring 82, wherein the magnetic ring and the inner core collectively form a rotor 92. The multiple sinusoidally magnetized permanent magnet ring 82 will produce multiple sinusoidally radial flux densities 86 in a constant length nonmagnetic gap 96 when sinusoidally magnetized in a radial fashion 84 as shown in Figure 5A. As the rotor 92 rotates, the magnetic flux density sensors 30e detect a sinusoidal magnetic flux density 86 and output a corresponding sinusoidal signal. The signal outputs of the magnetic flux density sensors 30e may be used to detect the absolute angular position of the rotor 92 or to provide sinusoidal signals to drive multiple phase electric machines, especially electric machines with more than two phases.

While the magnetic ring 82 may be in the form of a continuous multi-pole magnetized magnetic material, as shown by dashed lines 98, the ring may be composed of discrete magnetic arcuates 98 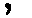 mutually connected by magnetic or nonmagnetic material 98 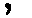 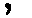 to collectively form the ring.

Figure 5B is an example of a multipole rotary position sensor 100 according to a third aspect of the present invention. The multipole rotary position sensor 100 consists of a magnetic ring 102 rotatable about a rotation axis R_{f}, wherein the ring is sinusoidally magnetized in a tangential fashion 104 as shown by the magnetic flux density 106 such as to produce a magnetic ring having multiple magnetic poles P₁ 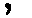 , P₂ 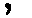 , P₃ 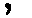 , P₄ 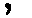 , as shown in Figure 5B. The multipole rotary position sensor 100 further consists of a stationary outer core 108 made of a ferromagnetic material, a stationary annulus 110 made of a nonmagnetic material with two or more magnetic flux density sensors 30f (ie., Hall sensors or magnetoresistors) which are appropriately positioned, not necessarily in quadrature, within the annulus to detect the magnetic flux density 106 to meet specific sensing requirements, and an inner core 114 made of either a ferromagnetic material or nonmagnetic material depending upon the application rotating in conjunction with the magnetic ring 102, wherein the magnetic ring and the inner core collectively form a rotor 112. The multiple sinusoidally magnetized cylindrical permanent magnet 102 will produce multiple sinusoidally radial flux densities 106 in a constant length nonmagnetic gap 116 when sinusoidally magnetized in a radial fashion 104 as shown in Figure 5B. As the rotor 112 rotates, the magnetic flux density sensors 30f detect a sinusoidal magnetic flux density 106 and output a corresponding sinusoidal signal. The signal outputs of the magnetic flux density sensors 30f may be used to detect the absolute angular position of the rotor 112 or to provide sinusoidal signals to drive multiple phase electric machines, especially electric machines with two or more pole pairs. Machines with one pole pair would use the sensor configurations of Figures 2A and 2B.

It is to be noted that while Figures 5A and 5B depict multipoles in the form of two pairs of magnetic poles, any number of pairs of magnetic poles may be provided. Further, the magnetic ring of Figure 5B may be continuous or may be composed of discrete arcuate magnets as shown at Figure 5A; indeed, any of the magnetic disks or rings may be discretely constructed.

Several comments concerning the rotary position sensor according to the present invention will be addressed hereinbelow.

The rotary position sensor according to the present invention is a low cost, analog position sensor comprising, in one form, a rotating, parallel magnetized disk-type magnet, a nonmagnetic annulus containing two or more linear magnetic flux density sensors (magnetoresistor or Hall sensor), and a ferromagnetic (also referred to as a "soft" magnetic) stationary core. The nonmagnetic annulus provides support for the magnetic flux density sensors and serves as a bearing surface for the rotating magnet, it also maintains the concentricity between the various elements of the sensor. However, embodiments without this annulus are also possible. The two-pole structure of the magnet allows for the maximum thickness of the annulus (or air gap) for a given magnet diameter, thus minimizing eccentricity effects.

A modified embodiment of the rotary position sensor according to the present invention is applicable to brushless motor applications, where the sensor permits direct control of the commutation by employing one sensor for each of the m-phases. In this case, the number of poles in the machine must match the number of poles of the sensor magnet. For applications with four or more poles, the magnetization must be modified from the parallel to either sinusoidal tangential or radial. In the radially magnetized case, either ring magnets or arcuates combined with a ferromagnetic core are required. The tangentially magnetized magnets do not need this core as the flux is contained almost entirely in the magnet.

Another modified embodiment of the rotary position sensor according to the present invention uses a ring magnet and ferromagnetic (soft magnetic) core in place of the magnet disk. In this embodiment, the ring magnet can be mounted directly over the shaft of a motor or any other device requiring similar rotary position monitoring.

Another embodiment of the rotary position sensor according to the present invention employs the sum of the outputs of a set of phase commutation sensors as a means for calibration and diagnostics. This is achieved by summing all output and checking for any deviation from a zero sum (ideal case).

Yet another embodiment of the rotary position sensor according to the present invention is where an m-phase brushless motor is operated using any set of (m-1) flux sensors. The output of the faulted flux density sensor is equal to the negative sum of the outputs of the remaining (m-1) flux density sensors. A fault tolerant sensor can therefore be constructed which can operate with the loss of any one of the (m) flux sensors.

It should be noted that while two magnetic flux density sensors are depicted in each shown embodiment, this is merely by way of example; one, two, or more magnetic flux density sensors may be used with any embodiment.

To those skilled in the art to which this invention appertains, the above described preferred embodiment may be subject to change or modification. Such change or modification can be carried out without departing from the scope of the invention, which is intended to be limited only by the scope of the appended claims.

## Claims

1. A rotary position sensor (20) comprising:
a magnetized disk (10) rotatable about a rotation axis (R);
an outer core (26) of a ferromagnetic material, said outer core being concentrically disposed relative to said axis of rotation;
an air gap (32) located between said outer core and said magnetized disk; and
at least one magnetic flux density sensor (30) selectively located at said air gap;
wherein the magnetization of said disk provides a magnetic field oriented in a plane perpendicular to said rotation axis.

2. The rotary position sensor of Claim 1, wherein said disk is homogeneously magnetized.

3. The rotary position sensor of Claim 2, further comprising an annulus (28) located between said outer core and said disk, said annulus being composed of a nonmagnetic material, said at least one sensor being embedded in said annulus.

4. The rotary position sensor of Claim 1, wherein said disk (62) is tangentially magnetized with at least one pair of poles.

5. The rotary position sensor of Claim 4, further comprising an annulus (70) located between said outer core and said disk, said annulus being composed of a nonmagnetic material, said at least one sensor (30c) being embedded in said annulus.

6. The rotary position sensor of Claim 1, wherein said disk (62) is tangentially magnetized with a plurality of pairs of poles (Pₐ, P_{b}, P_{c}, P_{d}).

7. The rotary position sensor of Claim 6, further comprising an annulus (70) located between said outer core and said disk, said annulus being composed of a nonmagnetic material, said at least one sensor (30c) being embedded in said annulus.

8. A rotary position sensor (20 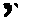 ) comprising:
a magnetized ring (10 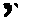 ) rotatable about a rotation axis (Rₐ),
an outer core (26 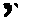 ) of a ferromagnetic material, said outer core being concentrically disposed relative to said axis of rotation;
an air gap (32 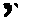 ) located between said outer core and said magnetized ring; and
at least one magnetic flux density sensor (30a) selectively located at said air gap;
wherein the magnetization of said ring provides a magnetic field oriented in a plane perpendicular to said rotation axis.

9. The rotary position sensor of Claim 8, wherein said ring (32 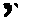 ) is homogeneously magnetized; and wherein said rotary position sensor further comprises an inner core (34) of ferromagnetic material disposed between said axis of rotation and said ring.

10. The rotary position sensor of Claim 9, further comprising an annulus (28 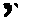 ) located between said outer core and said ring, said annulus being composed of a nonmagnetic material, said at least one sensor (30a) being embedded in said annulus.

11. The rotary position sensor of Claim 8, wherein said ring (62 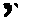 ) is tangentially magnetized with at least one pair of poles.

12. The rotary position sensor of Claim 11, further comprising an annulus (70 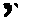 ) located between said outer core and said ring, said annulus being composed of a nonmagnetic material, said at least one sensor (30d) being embedded in said annulus.

13. The rotary position sensor of Claim 12, further comprising an inner core (72) of ferromagnetic material disposed between said axis of rotation and said ring.

14. The rotary position sensor of Claim 8, wherein said ring (102) is tangentially magnetized with a plurality of pairs of poles (P₁ 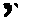 , P₂ 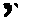 , P₃ 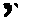 , P₄ 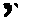 ).

15. The rotary position sensor of Claim 14, further comprising an annulus (110) located between said outer core and said ring, said annulus being composed of a nonmagnetic material, said at least one sensor (30f) being embedded in said annulus.

16. The rotary position sensor of Claim 15, further comprising an inner core (114) of ferromagnetic material disposed between said axis of rotation and said ring.

17. The rotary position sensor of Claim 14, wherein said plurality of poles comprise a plurality of mutually spaced apart magnetic arcuates.

18. The rotary position sensor of Claim 8, wherein said ring (42) is radially magnetized with at least one pair of poles; and wherein said rotary position sensor further comprises an inner core (52) of ferromagnetic material disposed between said axis of rotation and said ring.

19. The rotary position sensor of Claim 18, further comprising an annulus (46) located between said outer core and said ring, said annulus being composed of a nonmagnetic material, said at least one sensor (30b) being embedded in said annulus.

20. The rotary position sensor of Claim 8, wherein said ring (82) is radially magnetized with a plurality of pairs of poles (P₁, P₂, P₃, P₄).

21. The rotary position sensor of Claim 20, further comprising an annulus (90) located between said outer core and said ring, said annulus being composed of a nonmagnetic material, said at least one sensor (30e) being embedded in said annulus.

22. The rotary position sensor of Claim 21, wherein said plurality of poles comprise a plurality of mutually spaced apart magnetic arcuates (98 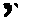 ).
